# EUROPÄISCHE PATENTSCHRIFT

(11) **EP 1 464 226 B1**
(45) Veröffentlichungstag und Bekanntmachung des Hinweises auf die Patenterteilung: **21.06.2006**
(21) Anmeldenummer: 04007929.5
(22) Anmeldetag: 01.04.2004
(51) Int. Cl.: A22C 17/00

(54) **Vorrichtung und Verfahren zum Herstellen von mit Lebensmitteln bestückten Spiessen**
Device and method for producing skewered food products
Procédé et dispositif pour la fabrication de brochettes de produits alimentaires

(30) Priorität: 04.04.2003 DE 10315619
(43) Veröffentlichungstag der Anmeldung: 06.10.2004
(73) Patentinhaber: Maja-Maschinenfabrik Hermann Schill GmbH & Co. KG, 77694 Kehl-Goldscheuer (DE)
(72) Erfinder: Schill, Joachim, 77694 Kehl (DE); Ilch, Hartmut, 77694 Kehl (DE)
(74) Vertreter: Lucht, Silvia

(56) Entgegenhaltungen:
- DE-A- 2 625 739
- DE-A- 2 851 062
- GB-A- 2 161 294
- US-A- 4 847 954
- US-A- 5 740 722

## Beschreibung

### Stand der Technik

Die Erfindung geht aus von einem Verfahren und einer Vorrichtung zum Herstellen von mit Lebensmitteln bestückten Spießen nach dem Oberbegriff der Ansprüche 1 und 8.

Aus dem Stand der Technik der DE 101 24 119 A1 ist eine Vorrichtung zur Herstellung von Schaschlikspießen bekannt, welche mehrere Bestückungsscheiben oder Bestückungsbänder aufweist. Diese sind mit einer Anzahl von Bestückungskammern ausgestattet. Sobald mehrere mit Zutaten gefüllte Bestückungskammern hintereinander angeordnet sind, wird ein Spieß durch die Bestückungskammern geschoben. Dabei werden die Zutaten in den Bestückungskammern auf den Spieß aufgespießt. Nachteilig erweist sich bei diesem Stand der Technik, dass die Bestückungskammern von Hand befüllt werden müssen. Außerdem können nur einige wenige Arten von Zutaten, wie beispielsweise Fleisch und Paprika verarbeitet werden. Darüber hinaus haben die fertigen Schaschlikspieße ein charakteristisches Aussehen, welches durch die Konturen eines Quaders bestimmt wird. Der Verbraucher erkennt damit sofort, dass der Schaschlikspieß zumindest teilweise maschinell hergestellt wurde. Dies ist bei den Herstellern jedoch nicht erwünscht.

Aus dem Stand der Technik der DE 695 07 155 T2 ist eine Maschine zur automatischen Herstellung von Fleisch- und/ oder Gemüsespießen bekannt. Zur Aufnahme der Zutaten sind Vertiefungen mit einer rechteckigen Form vorgesehen. Die Abmessungen der Vertiefungen stimmen mit den Abmessungen des gewünschten Schaschlikspießes überein. Die Vertiefungen werden vollständig mit Zutaten aller Art aufgefüllt. Schließlich wird ein Spieß über ein Rohr in die Zutaten der Vertiefungen eingeführt. Als nachteilig erweist sich bei diesem Stand der Technik, dass Zutatenstücke, welche die Vertiefungen im Querschnitt nur teilweise ausfüllen, durch den Spieß nur im Randbereich oder gar nicht erfasst werden. Die Bestückung der Vertiefungen mit Zutaten muss von Hand erfolgen. Darüber hinaus sind die Zutatenstücke auf dem Spieß so dicht aneinander aufgereiht, dass die sich berühren. Da die Spieße nach Ihrer Herstellung nicht sofort zubereitet und verzehrt sondern gelagert werden, ist das Berühren der einzelnen Zutatenstücke nicht erwünscht.

### Die Erfindung und ihre Vorteile

Demgegenüber haben das erfindungsgemäße Verfahren und die erfindungsgemäße Vorrichtung mit den Merkmalen der Ansprüche 1 und 8 den Vorteil, dass eine Befüllung oder Bestückung von Hand entfällt. Die Herstellung kann vollständig maschinell erfolgen. Dennoch sehen die Spieße aus, als seien sie von Hand gefertigt. Als Zutaten können beliebige Arten von Fleisch, Gemüse, Obst oder sonstige Stücke eines Lebensmittels in Form von Würfeln, Scheiben, Scheiben oder Streifen verwendet werden. Das Aufspießen der Zutatenstücke auf den Spieß geschieht jeweils an der gewünschten Stelle. Zum Herstellen von Schaschlikspießen, Obst- oder Gemüsespießen werden mehrere Zutaten-Stücke meist in Form eines Würfels auf den Spieß aufgeschoben. Zum Herstellen eines Lomo- oder Saté-Spießes wird ein Streifen Fleisch mittels eines Zutaten-Greifers in eine Form eingelegt und der Spieß durch die Form hindurch in das Fleisch eingeführt. Die Form hat dabei einen welligen Verlauf, so dass das Fleisch in einer Wellenform auf den Spieß aufgesteckt wird.

Die Zutatenstücke können wahlweise so aufgespießt werden, dass ein Abstand oder kein Abstand zwischen den einzelnen Stücken besteht.

Zur Halterung des Spießes ist eine Spieß-Halterung vorgesehen. Zusätzliche dazu kann der Spieß durch einen Spieß-Greifer gehalten oder bewegt werden. Dabei kann der Spieß vertikal, horizontal oder unter einem Winkel ausgerichtet sein. Durch die Halterung des Spießes an den beiden gegenüberliegenden Enden wird erreicht, dass der Spieß beim Aufsetzen eines Zutatenstücks nicht abbrechen kann. Das Abbrechen kann auch dann ausgeschlossen werden, wenn auf Grund der Geometrie des Zutatenstücks Kräfte auftreten, welche nicht in axialer Richtung des Spießes wirken.

Als Lagerung des stumpfen Endes des Spießes eignet sich beispielsweise eine den Abmessungen des Spießes entsprechende Vertiefung, in welche der Spieß hineingesteckt wird. Wird die Vertiefung anhand einer Transportvorrichtung bewegt, so kann die Zufuhr der noch unbestückten Spieße und der Abtransport der bestückten Schaschlikspieße ohne weitere Hilfsmittel erfolgen.

Die Zutaten werden von einer Unterlage durch Zutaten-Greifer aufgenommen. Das Bestücken des Spießes mit Zutaten geschieht ebenfalls mit Hilfe der Zutaten-Greifer. Dabei können entweder zunächst alle oder mehrere Zutatenstücke für einen Spieß durch mehrere Zutaten-Greifer aufgenommen und anschließend auf den Spieß aufgeschoben werden. Oder es besteht die Möglichkeit, dass ein Zutaten-Greifer ein Zutatenstück aufnimmt, dieses auf den Spieß schiebt und anschließend das nächste Zutatenstück aufnimmt.

Nach einer vorteilhaften Ausgestaltung des erfindungsgemäßen Verfahren setzt der Zutaten-Greifer zum Aufschieben eines Zutatenstücks, beispielsweise eines Stücks Fleisch, auf den Spieß das Zutatenstück auf dem spitzen Ende des Spießes ab. Sobald die Spitze des Spießes in das Zutatenstück eingedrungen ist, öffnet der Spieß-Greifer und gibt das spitze Ende des Spießes frei. Nun kann der Zutaten-Greifer das Zutatenstück ungehindert in Richtung des stumpfen Endes des Spießes verschieben. Eine Ausnehmung oder Öffnung in den Fingern des Zutaten-Greifers sorgt dafür, dass das spitze Ende des Spießes durch die Finger hindurchgeführt werden kann. Anschließend schließt der Spieß-Greifer und fixiert damit den Spieß erneut im Bereich des spitzen Endes. Nun öffnet der Zutaten-Greifer und gibt das an der vorgesehenen Position angeordnete Zutatenstück frei. Jetzt kann das nächste Zutatenstück aufgenommen und auf den Spieß aufgeschoben werden. Dies kann zum einen auf die beschriebene Weise erfolgen. Andererseits besteht die Möglichkeit, das nächste Zutatenstück, beispielsweise ein Stück Zwiebel oder Paprika, durch einen Zutaten-Greifer lediglich so weit auf die Spitze des Spießes aufzuschieben, dass es beim Lösen des Zutaten-Greifers nicht herunterfällt. Der Spieß-Greifer wird jedoch nicht gelöst und der Zutaten-Greifer verschiebt das Zutatenstücks nicht sofort an die gewünschte Position. Nun wird das dritte Zutatenstück, beispielsweise wiederum ein Stück Fleisch, auf die oben zuerst beschriebene Weise auf den Spieß geschoben. Dabei verschiebt sich das zweite Zutatenstück automatisch an die gewünschte Position. Sofern ein Abstand zwischen den Zutatenstücken gewünscht wird, muss das dritte Zutatenstück nach dem Positionieren des zweiten Zutatenstücks über eine Distanz, welche dem Abstand zwischen dem zweiten und dritten Zutatenstücks entspricht, zurückgezogen werden. Das Aufschieben der Zutatenstücke wird so oft wiederholt, bis der Spieß mit einer vorgegebenen Anzahl von Zutatenstücken bestückt ist. Ist der Vorgang abgeschlossen, so wird der fertige Schaschlikspieß abtransportiert. Hierzu wird der Schaschlikspieß zum Beispiel auf einem Transportband zur weiteren Bearbeitung abgelegt oder in eine Verpackung überfährt.

Die einzelnen Zutatenstücke werden entweder auf einer Unterlage so zugeführt, dass die Zutaten-Greifer die Stücke jeweils ungefähr an derselben Position aufnehmen können oder sie werden über eine Transportvorrichtung in beliebiger Anordnung zugeführt. Die Position und eventuell auch die Ausrichtung der Zutatenstücke wird mit Hilfe eines optischen Sensors, beispielsweise einer Kamera und einer Bildverarbeitungseinheit bestimmt und an eine Steuerung weitergeleitet. Diese sorgt dafür, dass der Zutaten-Greifer an die Positionen des Zutatenstücks fährt und dieses entsprechend seiner Ausrichtung aufnimmt.

Zum Zuführen der Zutatenstücke in beliebiger Anordnung eignet sich beispielsweise ein Transportband. Die Zutatenstücke können entweder von Hand auf das Band aufgelegt oder maschinell auf das Band geschüttet werden. Dabei ist darauf zu achten, dass die Zutatenstücke nebeneinander und nicht aufeinander liegen. Um die Zutatenstücke entsprechend dieser Anforderung auf dem Transportband zu verteilen, kann eine Rüttelvorrichtung oder eine Vorrichtung zum Abstreifen vorgesehen sein.

Um die Zutaten-Greifer zu bewegen, ist entweder ein beweglicher Arm eines Industrieroboters oder eine in zwei Richtungen verfahrbare oder verschiebbare Handhabungsvorrichtung vorgesehen. Die Zutaten-Greifer und der Spieß-Greifer können Teil eines Industrieroboters sein. Die Programmierung des Industrieroboters ist auf den Ablauf des Verfahrens abgestimmt. Die Zutaten-Greifer befinden sich an den Enden eines oder mehrerer beweglicher Arme. Nach einer vorteilhaften Ausgestaltung der erfindungsgemäßen Vorrichtung kann der Arm eines Industrieroboters eine drehbare Einheit mit mehreren Zutaten-Greifern aufweisen. Zur Aufnahme mehrerer Zutatenstücke wird ein erster Zutaten-Greifer an ein erstes Zutatenstück herangeführt und nimmt dieses auf. Anschließend wird die drehbare Einheit gedreht, so dass ein zweiter Zutaten-Greifer ein zweites Zutatenstück aufnehmen kann. Dieser Vorgang wird so oft wiederholt, bis alle Zutaten-Greifer ein Zutatenstück aufgenommen haben. Anschließend werden die Zutatenstücke nacheinander auf einem Spieß aufgeschoben.

Nach einer vorteilhaften Ausgestaltung der erfindungsgemäßen Vorrichtung sind als Spieß-Greifer und als Zutaten-Greifer Winkel- oder Parallelgreifer vorgesehen. Diese weisen Finger auf, an welchen Backen befestigt sind. Die Finger werden bei Winkelgreifern verschwenkt, so dass Sie beim Öffnen und Schließen einem Winkel einschließen. Die Finger eines Parallelgreifers werden beim Öffnen und Schließen parallel aufeinander zu- und voneinander wegbewegt. Die Backen dienen zum Einspannen eines Zutatenstücks. Darüber hinaus können als Zutaten-Greifer auch Sauggreifer eingesetzt werden. Diese weisen einen Saugnapf auf, an dem über Luftleitungen Luft abgesaugt wird.

Nach einer weiteren vorteilhaften Ausgestaltung der Erfindung ist als Zutaten-Greifer ein Nadelgreifer vorgesehen. Dieser kann zum Beispiel aus zwei koaxial zueinander angeordneten Hohlzylindern bestehen, an deren Stirnflächen Nadeln vorgesehen sind. Zum Aufnehmen eines Lebensmittelstücks werden die beiden Hohlzylinder um die gemeinsame Achse in entgegengesetzte Richtungen gedreht und auf das Lebensmittelstück zubewegt. Die gegen die Stirnfläche der Hohlzylinder geneigten Nadeln dringen dabei in einer Schraubenbewegung in das Lebensmittelstück ein. Die Stirnfläche der Hohlzylinder bilden einen Anschlag. Die Drehmomentsteuerung bewirkt, dass die Hohlzylinder nicht weiter zur Rotation angetrieben werden, wenn die Nadeln bereits in das Lebensmittelstück eingedrungen sind. Aufgrund der gegeneinander verschränkten Nadeln verbleibt das Lebensmittelstück an dem Nadelgreifer. Zum Ablegen des Lebensmittelstück werden die beiden Hohlzylindern in die entgegengesetzte Richtung wie beim Aufnehmen rotiert.

Nach einer weiteren vorteilhaften Ausgestaltung der Erfindung besteht der Nadelgreifer aus einem ersten und einen zweiten Greiferblock, die linear aufeinander zu- und voneinander weg bewegt werden können. Nadeln sind mit einem Ende in dem zweiten Greiferblock befestigt und in Nadelführungskanälen des ersten Greiferblocks verschiebbar geführt. Ein mit dem zweiten Greiferblock fest verbundener Antrieb dient zum Annähern des Nadelgreifers an ein aufzunehmendes Lebensmittelstück. Ein Sensor misst die Strecke, um die die beiden Greiferblöcke aufeinander zu bewegt werden. Beim Annähern der beiden Greiferblöcke aneinander werden die Nadeln aus den Nadelführungskanälen herausgeschoben und dringen in die Oberfläche eines Lebensmittelstücks ein. Da die Nadeln gegeneinander verschränkt sind, bleibt das Lebensmittelstück an dem Nadelgreifer hängen, wenn er zusammen mit dem Lebensmittelstück angehoben wird. Zum Ablegen des Lebensmittelstück werden die beiden Greiferblöcke von einander wegbewegt. Dabei ziehen sich die Nadeln in die Nadelführungskanäle zurück und aus dem Lebensmittelstück heraus. Dank des Sensors kann festgelegt werden, wie weit die Nadeln in das Lebensmittelstück eindringen.

Weitere Vorteile und vorteilhafte Ausgestaltungen sind der nachfolgenden Beschreibung, der Zeichnung und den Ansprüchen zu entnehmen.

### Zeichnung

In der Zeichnung ist ein Ausführungsbeispiel der erfindungsgemäßen Vorrichtung ist in der Zeichnung dargestellt und im folgenden näher erläutert. Es zeigen:

In der Zeichnung ist ein Ausführungsbeispiel der erfindungsgemäßen Vorrichtung dargestellt und im Folgenden näher beschrieben. Es zeigen:
- Figur 1: Vorrichtung zum Herstellen von Schaschlikspießen in perspektivischer Ansicht,
- Figur 2: Ausschnitt aus Figur 1,
- Figur 3: erste Version eines Nadelgreifers in perspektivischer Ansicht,
- Figur 4: Ausschnitt aus Figur 3 entsprechend dem, mit A gekennzeichneten Kreis in Figur 3,
- Figur 5: zweite Version eines Nadelgreifers in perspektivischer Ansicht,
- Figur 6: Schnitt durch den Nadelgreifer gemäss Figur 5.

### Beschreibung des Ausführungsbeispiels

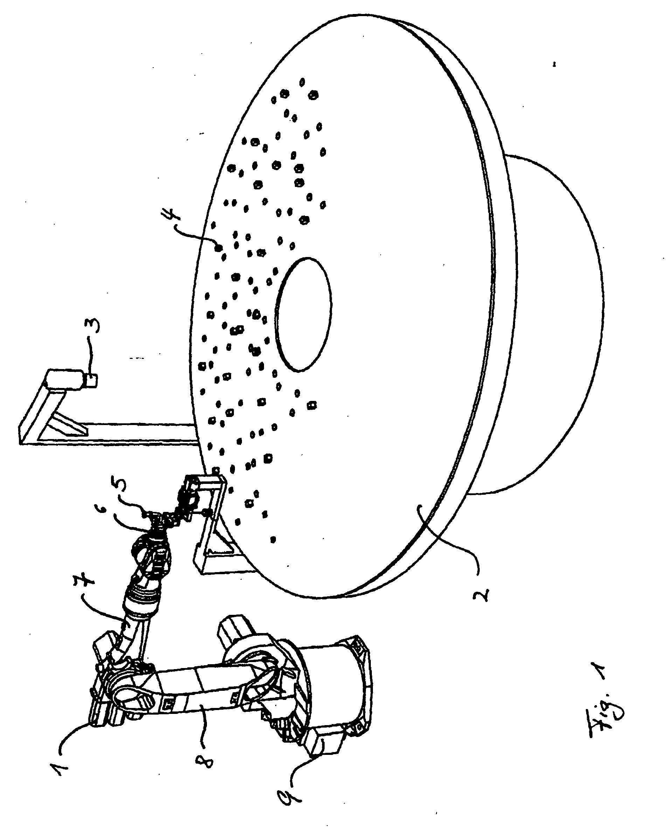

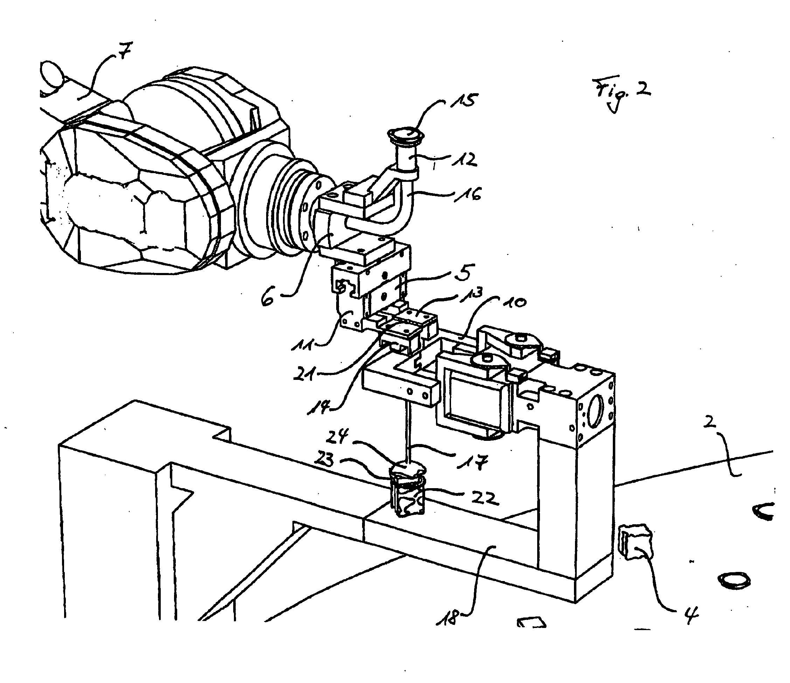

In Figur 1 ist eine Vorrichtung zum Herstellen von Schaschlikspießen mit einem Industrieroboter 1, einem drehbaren Tisch 2 und einer Vorrichtung zur Bildverarbeitung mit einer Kamera 3 dargestellt. Auf dem drehbaren Tisch 2 liegen Zutatenstücke 4 für Schaschlikspieße. Die Position und Ausrichtung der Zutatenstücke 4 wird durch die Kamera 3 aufgenommen. Die aufgenommenen Daten werden anhand einer Bildverarbeitungseinheit analysiert und an den Industrieroboter 1 übermittelt. Bei der Bildverarbeitungseinheit kann es sich beispielsweise um einen Computer handeln, der mit einer geeigneten Software ausgestattet ist. Dieser Computer kann auch den Industrieroboter ansteuern und die Kinematik auf die durch die Kamera 3 ermittelten Daten abstimmen. Durch den drehbaren Tisch 2 werden die durch die Kamera 3 aufgenommenen Zutatenstücke 4 den Zutaten-Greifern 5 des Industrieroboters 1 zugeführt. Die Zutaten-Greifer 5 sind an der drehbaren Einheit 6 des beweglichen Arms 7 des Industrieroboters angeordnet. Die drehbare Einheit und die Zutaten-Greifer sind in Figur 2 erkennbar. Der bewegliche Arm 7 ist mit einem zweiten beweglichen Arm 8 verbunden. Die beiden Arme 7 und 8 sowie die drehbaren Einheit 6 und die Zutaten-Greifer 5 werden durch das Antriebssystem 9 bewegt. Auf diese Weise können die Zutaten-Greifer 5 an die auf dem drehbaren Tisch 2 liegende Zutatenstücke 4 herangeführt werden.

Figur 2 zeigt einen Ausschnitt aus Figur 1. In dieser Darstellung ist die drehbare Einheit 6 mit den Zutaten-Greifern 5 zu erkennen. Außerdem zeigt die Darstellung den Spieß-Greifer 10. Als Zutaten-Greifer sind ein Parallelgreifer 11 und ein Sauggreifer 12 vorgesehen. Der Parallelgreifer weist zwei Finger 13 mit daran befestigten Backen 14 auf. Zwischen die beiden Backen wird ein Zutatenstück 4, beispielsweise ein Fleischstück, eingeklemmt. Hierzu wird der Parallelgreifer an ein auf dem Tisch liegendes Zutatenstück 4 in geöffneter Stellung herangeführt. Schließlich werden die beiden Finger 13 aufeinander zu bewegt, so dass das Zutatenstück 4 zwischen die beiden Backen eingeklemmt wird. Der Sauggreifer 12 ist mit einem Saugnapf 15 ausgestattet. Über eine in der Zeichnung nicht dargestellte Luftleitung in dem Rohr 16 wird Luft aus dem Saugnapf 15 abgesaugt. Wird der Sauggreifer 12 an ein Zutatenstück 4 auf dem drehbaren Tisch herangeführt und der Saugnapf 15 auf das Zutatenstück 4 aufgesetzt, so bleibt das Zutatenstück durch den Unterdruck im Saugnapf am Sauggreifer 12 haften. Der Sauggreifer 12 eignet sich insbesondere für Paprika, Zwiebel und sonstige Gemüse- und Obststücke.

Der Spieß 17 wird an seiner Unterseite durch ein Loch in der Unterlage 18 fixiert. Das Loch ist in der Zeichnung nicht erkennbar, da es durch ein Zutatenstück abgedeckt ist. Die Spitze des Spießes 17 wird durch den Spieß-Greifer 10 gehalten. Dabei handelt es sich um einen Winkelgreifer. Die beiden Finger 20 des Spieß-Greifers 10 umgreifen die Spitze des Spießes 17.

Das Bestücken des Spießes 17 mit den Zutatenstücken 4 geschieht folgendermaßen:

Zunächst wird einer der beiden Zutaten-Greifer 5 an ein Zutatenstück 4 auf dem drehbaren Tisch 2 herangeführt. Die Information hierzu wird durch die Kamera 3 und eine in der Zeichnung nicht dargestellte Vorrichtung zur Bildverarbeitung zur Verfügung gestellt. Der Zutaten-Greifer 5, beispielsweise der Parallelgreifer 11, nimmt ein Zutatenstück 4, beispielsweise ein Fleischstück, von dem drehbaren Tisch 2 auf und setzt dieses auf der Spitze des Spießes 17 ab. Nun öffnet der Spieß-Greifer 10 und der Parallelgreifer 11 kann das Zutatenstück 4 ungehindert bis an die vorgesehene Position auf dem Spieß 17 schieben. Anschließend schließt der Spieß-Greifer 10 und der Parallelgreifer 11 öffnet sich, um das Zutatenstück freizugeben. In den beiden Fingern 13 befindet sich eine Ausnehmung 21, durch die der Spieß beim Verschieben eines Zutatenstücks entlang des Spießes 17 hindurch geführt werden kann. In der Zeichnung befinden sich bereits ein Stück Fleisch 22, ein Stück Paprika 23 und ein Stück Zwiebel 24 auf dem Spieß 17.

Die durch den Sauggreifer 12 aufgenommenen Zutatenstücke werden lediglich auf die Spitze des Spießes 17 aufgesetzt. Der Sauggreifer sorgt nicht für das Verschieben des Zutatenstücks an die hierfür vorgesehene Position auf dem Spieß 17. Dies geschieht erst durch ein nachfolgendes Fleischstück, welches durch den Parallelgreifer 11 zusammen mit den vorangehenden Gemüsestücken an die vorgesehene Position geschoben wird.

Zum Aufnehmen der Zutatenstücke werden die Zutaten-Greifer 5 an den drehbaren Tisch herangeführt. Dabei können zunächst beide Zutaten-Greifer 5 Zutatenstücke aufnehmen, bevor die beweglichen Arme 7 und 8 die Zutaten-Greifer 5 an den Spieß 17 annähern. Zum Aufnehmen verschiedener Zutatenstücke wird die drehbare Einheit 6 gedreht. Darüber hinaus besteht die Möglichkeit, dass jedes Zutatenstück unmittelbar nach dem Aufnehmen durch den Zutaten-Greifer 5 auf den Spieß 17 aufgesetzt wird.

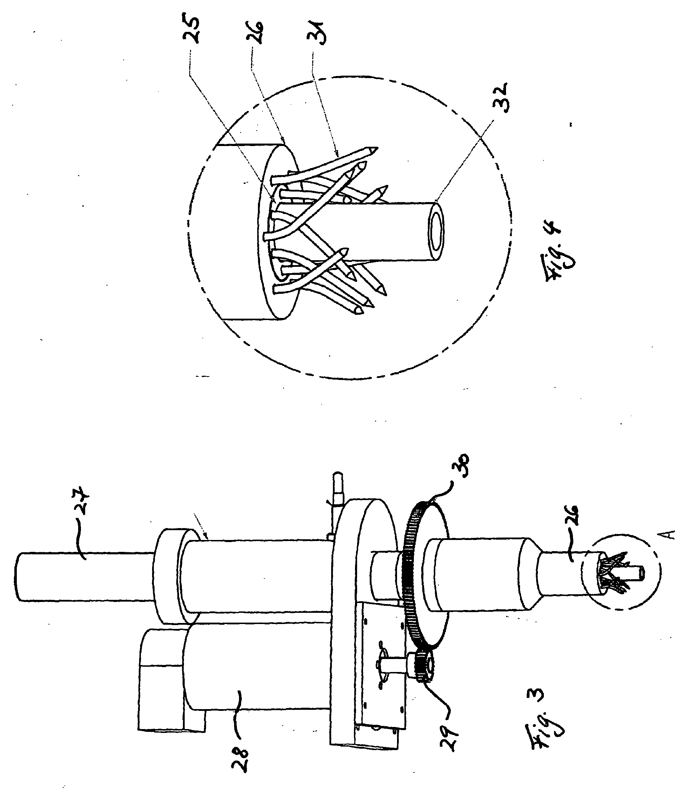

Figuren 3 und 4 zeigen ein erstes Ausführungsbeispiel eines Nadelgreifers mit zwei koaxial ineinander angeordneten Hohlzylindern 25 und 26. Die beiden Hohlzylinder werden in entgegengesetzte Richtungen zur Rotation angetrieben. Der Antrieb des inneren Hohlzylinders 25 erfolgt über einen Roboter, an welchem der Nadelgreifer mit dem Roboter-Anschlusselement 27 angeschlossen werden kann. Der Roboter selbst ist in Figur 3 nicht dargestellt. Es kann sich dabei jedoch um einen Roboter, wie in Figur 1 dargestellt, handeln. Der Antrieb des äußeren Hohlzylinders 26 erfolgt über einen Elektromotor 28 und ein Getriebe aus zwei Zahnrädern 29 und 30. An den Stirnflächen der Hohlzylinder 25 und 26 sind Nadeln 31 angeordnet, welche gegen die Stirnflächen geneigt sind. Dabei sind die Nadeln des inneren Hohlzylinders 25 alle in die selbe Richtung geneigt, während die Nadeln des äußeren Hohlzylinders 26 alle in die entgegengesetzte Richtung geneigt sind. Koaxial zu den beiden Hohlzylindern 25 und 26 ist ein Taststift 32 im Inneren des inneren Hohlzylinders angeordnet. Dieser erkennt durch Berührung wenn der Nadelgreifer auf einen Gegenstand, beispielsweise ein Lebensmittelstück, aufsetzt. In Abhängigkeit davon werden die beiden Hohlzylinder zur Rotation angetrieben. Die Drehrichtung der beiden Hohlzylinder kann umgedreht werden. Die Rotation erfolgt zum Aufnehmen eines Lebensmittelstücks in eine andere Richtung als beim Ablegen des Lebensmittelstücks.

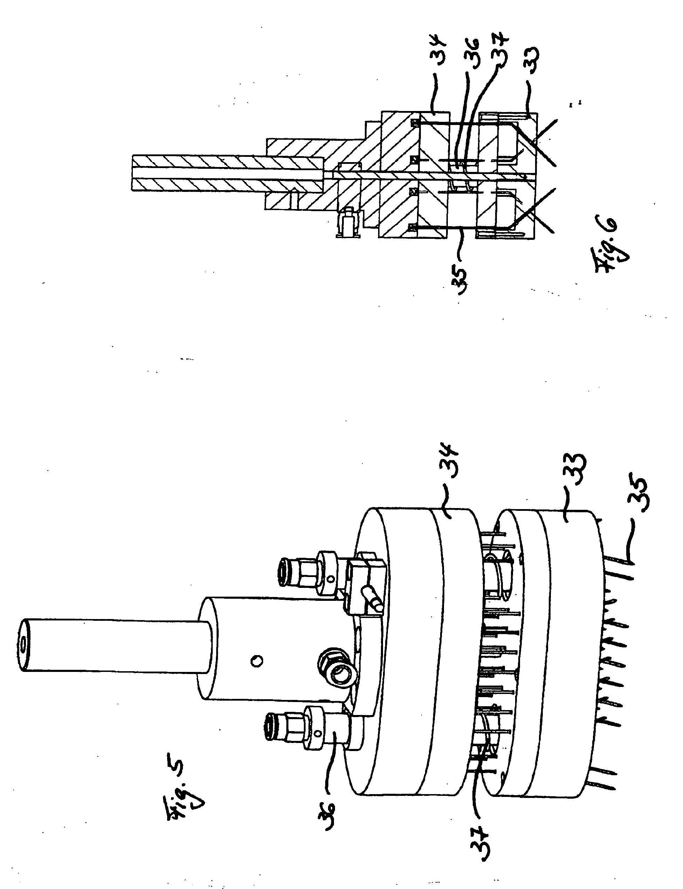

Die Figuren 5 und 6 zeigen ein zweites Ausführungsbeispiel eines Nadelgreifers. Der Nadelgreifer besteht aus einem ersten Greiferblock 33 und einem zweiten Greiferblock 34. In dem zweiten Greiferblock sind Nadeln 35 mit ihrem oberen Ende befestigt. Sie verlaufen in dem ersten Greiferblock in Nadelführungskanälen. Die Nadelführungskanäle sind in Figur 6 zwar enthalten, jedoch nicht exakt dargestellt. Damit die aus dem ersten Greiferblock nach unten herausragenden vorderen Enden der Nadeln 35 gegeneinander verschränkt sind, haben die Nadelführungskanäle einen gekrümmten Verlauf. Die flexiblen Nadeln folgen dem Verlauf der Nadelführungskanäle. Die Figuren 5 und 6 zeigen den Nadelgreifer mit ausgefahrenen Nadeln. In dieser Stellung kann ein an den Nadeln hängendes Lebensmittelstück transportiert werden. Die Nadeln werden in den ersten Greiferblock zurückgezogen, indem erster und zweiter Greiferblock voneinander entfernt werden. Zwischen dem ersten und dem zweiten Greiferblock sind Führungselemente 36 vorgesehen, welche in Schraubenfedern 37 geführt sind. Das Roboteranschlussteil 38 dient zum Befestigen des Nadelgreifers an dem Arm eines Roboters.

### Bezugszahlenliste

- 1: Industrieroboter
- 2: drehbarer Tisch
- 3: Kamera
- 4: Zutatenstück
- 5: Zutaten-Greifer
- 6: drehbare Einheit
- 7: beweglicher Arm
- 8: zweiter beweglicher Arm
- 9: Antriebssystem
- 10: Spieß-Greifer
- 11: Parallelgreifer
- 12: Sauggreifer
- 13: Finger der Parallelgreifers
- 14: Backen des Parallelgreifers
- 15: Saugnapf
- 16: Rohr
- 17: Spieß
- 18: Unterlage
- 19:
- 20: Finger des Spießgreifers
- 21: Ausnehmung
- 22: Fleischstück
- 23: Paprikastück
- 24: Zwiebelstück
- 25: innerer Hohlzylinder
- 26: äußerer Hohlzylinder
- 27: Roboter-Anschlusselement
- 28: Elektromotor
- 29: Zahnrad
- 30: Zahnrad
- 31: Nadel
- 32: Taststift
- 33: erster Greiferblock
- 34: zweiter Greiferblock
- 35: Nadel
- 36: Führungselement
- 37: Schraubenfeder

## Patentansprüche

1. Verfahren zum Herstellen von mit Lebensmitteln bestückten Spießen **gekennzeichnet durch** folgende Verfahrensschritte:
Fixieren des Spießes (17),
Zuführen der Lebensmittelstücke (4) auf einer Transportvorrichtung,
Bestimmen der Positionen der Lebensmittelstücke auf der Transportvorrichtung mit einem optischen Sensor (3) und einer Bildverarbeitungseinheit,
Ansteuern eines oder mehrerer Zutaten-Greifer (5) unter Verwendung der Positionen der Lebensmittelstücke auf der Transportvorrichtung,
Aufnehmen der Lebensmittelstücke mit dem oder den Zutaten-Greifern,
Aufstecken der Lebensmittelstücke auf den Spieß mit Hilfe des Zutaten-Greifers.

2. Verfahren nach Anspruch 1, wobei vor dem Aufstecken der Lebensmittelstücke auf den Spieß die Lebensmittelstücke mit Hilfe des Zutatengreifers (5) in einer Form abgelegt werden und anschließend ein Spieß in die Form eingeführt wird.

3. Verfahren nach Anspruch 1, **dadurch gekennzeichnet, dass** die Spieße mit Hilfe eines Spieß-Greifers bewegt und gehalten werden.

4. Verfahren nach Anspruch 1 oder 2, **dadurch gekennzeichnet, dass** die Zutaten-Greifer (5) und/ oder der Spieß-Greifer (10) durch eine Steuerung gesteuert werden, wobei die Bildverarbeitungseinheit mit der Steuerung verbunden ist oder Teil der Steuerung ist.

5. Verfahren nach Anspruch 1, 3 oder 4, **dadurch gekennzeichnet,**
**dass** das stumpfe Ende des Spießes (17) gelagert wird,
**dass** der Spieß nahe dem spitzen Ende mit Hilfe eines Spieß-Greifers (10) gehalten wird,
**dass** ein oder mehrere Zutatenstücke (4) mit Hilfe von Zutaten-Greifern (5) aufgenommen werden,
**dass** ein erstes Zutatenstücks (4) auf die Spitze des Spießes mit Hilfe eines ersten Zutaten-Greifers (5) aufgesteckt wird,
**dass** der Spieß-Greifer (10) geöffnet wird,
**dass** das Zutatenstück (4) an die vorgegebene Position auf dem Spieß (17) mit Hilfe des ersten Zutaten-Greifers (5) geschoben wird,
**dass** der Spieß-Greifer (10) geschlossen wird,
**dass** der erste Zutaten-Greifer (5) geöffnet wird,
**dass** ein zweites Zutatenstück (4) auf die Spitze des Spießes (17) mit Hilfe des ersten oder eines zweiten Zutaten-Greifers (5) aufgesteckt wird,
**dass** die Schritte: Öffnen des Spieß-Greifers, Schieben des Zutatenstücks an die vorgegebene Position auf dem Spieß, Schließen des Spieß-Greifers, Öffnen des Zutaten-Greifers, Aufstecken eines weiteren Zutatenstücks auf die Spitze des Spießes wiederholt werden, bis der Spieß mit einer vorgegebenen Anzahl von Zutatenstücken bestückt ist,
Abtransport des bestückten Spießes.

6. Verfahren nach Anspruch 5, **dadurch gekennzeichnet, dass** jedes zweite Zutatenstück (4) lediglich auf die Spitze des Spießes mit dem Zutaten-Greifer (5) aufgesetzt wird und der Zutaten-Greifer (5) anschließend geöffnet wird, und dass das Zutatenstück durch das darauffolgende Zutatenstück an die vorgegebene Position auf dem Spieß (17) geschoben wird.

7. Verfahren nach einem der vorhergehenden Ansprüche 1, 3 bis 6, **dadurch gekennzeichnet, dass** die Zutatenstücke mit einem Abstand zum benachbarten Zutatenstück auf den Spieß aufgeschoben werden.

8. Vorrichtung zum Herstellen von mit Lebensmitteln bestückten Spießen insbesondere zur Durchführung des Verfahrens nach einem der Ansprüche 1 bis 7,
**dadurch gekennzeichnet,**
**dass** eine Spieß-Halterung für einen Spieß vorgesehen ist,
**dass** eine Transportvorrichtung zum Zuführen der Lebensmittelstücke (4) vorgesehen ist,
**dass** ein optischer Sensor und eine Bildverarbeitungseinheit vorgesehen sind,
**dass** ein oder mehrere Zutaten-Greifer zum Aufnehmen der Lebensmittelstücke von der Transportvorrichtung vorgesehen sind,
**dass** eine Steuerung zum Steuern der Zutaten-Greifer vorgesehen ist, welche an die Bildverarbeitungseinheit gekoppelt ist.

9. Vorrichtung nach Anspruch 8, **dadurch gekennzeichnet, dass** als Spieß-Halterung eine Aufnahme für das stumpfe Ende des Spießes (17) vorgesehen ist.

10. Vorrichtung nach Anspruch 8, **dadurch gekennzeichnet, dass** als Spieß-Halterung oder zusätzlich zu der Spieß-Halterung ein Spieß-Greifer zum Halten und/ oder Bewegen des Spießes vorgesehen ist.

11. Vorrichtung nach Anspruch 10, **dadurch gekennzeichnet, dass** eine Steuerung zum Steuern des Spieß-Greifers vorgesehen ist.

12. Vorrichtung nach einem der Ansprüche 8 bis 11, **dadurch gekennzeichnet, dass** eine oder mehrere Formen zum Ablegen und Anordnen der Lebensmittelstücke vorgesehen sind.

13. Vorrichtung nach Anspruch 12, **dadurch gekennzeichnet, dass** die Formen Führungen für den Spieß aufweisen.

14. Vorrichtung nach Anspruch 8, **dadurch gekennzeichnet, dass** Schablonen als Führung für den Spieß vorgesehen sind.

15. Vorrichtung nach einem der Ansprüche 8 bis 14, **dadurch gekennzeichnet, dass** mehrere Zutaten-Greifer (5, 11, 12) an einer drehbaren Einheit (6) eines beweglichen Arms (7) eines Industrieroboters (1) befestigt sind.

16. Vorrichtung nach einem der Ansprüche 8 bis 14, **dadurch gekennzeichnet, dass** der oder die Zutaten-Greifer an einer in zwei Dimensionen linear verfahrbaren und/ oder verschiebbaren Handhabungseinrichtung angeordnet sind.

17. Vorrichtung nach Anspruch 16, **dadurch gekennzeichnet, dass** die Handhabungsvorrichtung oberhalb der Transportvorrichtung angeordnet ist.

18. Vorrichtung nach einem der Ansprüche 8 bis 17, **dadurch gekennzeichnet, dass** als Transportvorrichtung mehrere parallel zueinander verlaufende Transportbänder vorgesehen sind.

19. Vorrichtung nach Anspruch 10, **dadurch gekennzeichnet, dass** als Zutaten-Greifer und/ oder als Spieß-Greifer (10) ein Winkel- oder Parallelgreifer vorgesehen ist.

20. Vorrichtung nach Anspruch 15, **dadurch gekennzeichnet, dass** der Winkel- oder Parallelgreifer (11) zwei Finger (13) und je eine an den Fingern befestigte Backe (14) zum Halten eines Zutatenstücks (4) aufweist, und dass jeder der beiden Finger an den einander zugewandten Seiten eine Ausnehmung (21) aufweist, durch welche der Spieß (17) beim Aufschieben von Zutatenstücken (4) hindurchgeführt werden kann.

21. Vorrichtung nach einem der Ansprüche 8 bis 18, **dadurch gekennzeichnet, dass** als Zutaten-Greifer (11, 12) Sauggreifer vorgesehen sind.

22. Vorrichtung nach einem der Ansprüchen 8 bis 18, **dadurch gekennzeichnet, dass** ein Nadelgreifer als Zutaten-Greifer vorgesehen ist.

23. Vorrichtung nach Anspruch 22, **dadurch gekennzeichnet, dass** der Nadelgreifer mindestens zwei koaxial zueinander angeordneter Hohlzylinder aufweist, dass ein oder mehrere Rotationsantriebe zur Rotation der Hohlzylinder in entgegengesetzte Richtungen um die gemeinsame Achse vorgesehen sind, dass ein Linearantrieb zum linearen Verschieben der Zylinder in Richtung ihrer gemeinsamen Achse vorgesehen ist, dass an den Stirnflächen der Hohlzylinder Nadeln vorgesehen sind, welche gegen die Stirnfläche geneigt sind, und dass der oder die Rotationsantriebe der Hohlzylinder drehmomentgesteuert sind.

24. Vorrichtung nach Anspruch 23, **dadurch gekennzeichnet, dass** für den Linearantrieb und einen der Rotationsantriebe ein Roboter vorgesehen ist.

25. Vorrichtung nach Anspruch 24, **dadurch gekennzeichnet, dass** als zweiter Rotationsantrieb ein zusätzlicher Motor mit Drehmomentsteuerung vorgesehen ist, welche an die Robotersteuerung gekoppelt ist.

26. Vorrichtung nach Anspruch 22, **dadurch gekennzeichnet, dass** ein erster und ein zweiter Greiferblock vorgesehen sind,
dass Führungselemente vorgesehen sind, welche fest mit dem ersten Greiferblock verbunden sind und in dem zweiten Greiferblock verschiebbar geführt sind,
dass eine oder mehrere Federn vorgesehen sind, welche zwischen die beiden Greiferblöcke eingesetzt sind,
dass Nadeln vorgesehen sind, welche mit einem Ende in dem zweiten Greiferblock befestigt sind und in Nadelführungskanälen des ersten Greiferblocks verschiebbar geführt sind,
dass ein mit dem zweiten Greiferblock fest verbundener Antrieb vorgesehen ist zum Annähern der Vorrichtung an ein aufzunehmendes Lebensmittelstück, und
dass ein an dem zweiten Greiferblock oder an einem der Führungselementen angeordneter Sensor vorgesehen ist zum Messen der Strecke, um die die beiden Blöcke aufeinander zu bewegt werden.

27. Vorrichtung nach Anspruch 26, **dadurch gekennzeichnet, dass** eine Steuerung des Antriebs vorgesehen ist, welche als Eingangsdaten die durch den Sensor gemessene Strecke erhält.

28. Vorrichtung nach einem der Ansprüche 8 bis 27, **dadurch gekennzeichnet, dass** als optischer Sensor eine Kamera vorgesehen ist.

## Claims

1. Method for producing skewered food products **characterised by** the following procedure steps:
fixing of the skewer (17),
supplying of the pieces of foodstuff (4) on a transport device,
determination of the positions of the pieces of foodstuff on the transport device by means of an optical sensor (3) and an image processing unit,
controlling of one or more ingredient grippers (5) using the positions of the pieces of foodstuff on the transport device,
picking up of the pieces of foodstuff using one or more ingredient grippers,
placing of the pieces of foodstuff onto the skewer using the ingredient gripper.

2. Method according to claim 1, whereby prior to the slipping of the pieces of foodstuff onto the skewers the pieces of foodstuff are deposited in a mould by means of the ingredient gripper (5) and a skewer is subsequently introduced into the mould.

3. Method according to claim 1, **characterised in that** the skewers are moved and held by means of a skewer gripper.

4. Method according to claim 1 or 2, **characterised in that** ingredient grippers (5) and/or the skewer grippers (10) are controlled by a control unit, whereby the image processing unit is connected to the control unit or is part of the control unit.

5. Method according to claim 1, 3 or4, **characterised in that** the blunt end of the skewer (17) is mounted,
the skewer is held by means of a skewer gripper (10) near its sharp end,
one or more pieces of ingredient (4) are picked up by means of ingredient grippers (5),
a first piece of ingredient (4) is placed onto the sharp end of the skewer by means of a first ingredient gripper (5),
the skewer gripper (10) is opened,
the piece of ingredient (4) is pushed to the predetermined position on the skewer (17) by means of the first ingredient gripper (5),
the skewer gripper (10) is closed,
the first ingredient gripper (5) is opened,
a second piece of ingredient (4) is placed onto the sharp end of the skewer (17) by means of the first or a second ingredient gripper (5),
the steps: opening of the skewer gripper, pushing of the piece of ingredient to the predetermined position on the skewer, closing of the skewer gripper, opening of the ingredient gripper, placing of a further piece of ingredient on the sharp end of the skewer are repeated until the skewer is filled with a predetermined number of pieces of ingredient,
removal of the filled skewer.

6. Method according to claim 5, **characterised in that** every second piece of ingredient (4) is placed only on the sharp tend of the skewer by means of the ingredient gripper (5), the ingredient gripper (5) is subsequently opened and the piece of ingredient is pushed to the predetermined position on the skewer (17) by the subsequent piece of ingredient.

7. Method according to one of the previous claims 1, 3 to 6, **characterised in that** the pieces of ingredient are placed onto the skewer at a distance from the next piece of ingredient.

8. Device for producing skewered food products, in particular for execution of the method according to one of claims 1 to 7,
**characterised in that**
a skewer holder for a skewer is provided,
a transport device for supplying the pieces of foodstuff (4) is provided,
an optical sensor and an image processing unit are provided,
one or more ingredient grippers for picking up the pieces of foodstuff from the transport device are provided,
a control unit for controlling the ingredient grippers and which is connected to the image processing unit is provided.

9. Device according to claim 8, **characterised in that** the skewer holder comprises a retainer for the blunt end of the skewer (17).

10. Device according to claim 8, **characterised in that** a skewer holder or in addition to the skewer holder a skewer gripper is provided for holding and/or moving the skewer.

11. Device according to claim 10, **characterised in that** a control unit is provided for controlling the skewer gripper.

12. Device according to one of claims 8 to 11, **characterised in that** one or more moulds are provided for placing and arranging the pieces of foodstuff.

13. Device according to claim 12, **characterised in that** the moulds comprise guides for the skewer.

14. Device according to claim 8, **characterised in that** guide plates are provided to guide the skewer.

15. Device according to one of claims 8 to 14, **characterised in that** several ingredient grippers (5, 11, 12) are mounted on a turnable unit (6) of a movable arm (7) of an industrial robot (1).

16. Device according to one of claims 8 to 14, **characterised in that** the one or more ingredient grippers are arranged on a handling device that can be rolled and/or moved linearly in two dimensions.

17. Device according to claim 16, **characterised in that** the handling device is arranged above the transport device.

18. Device according to one of claims 8 to 17, **characterised in that** several conveying belts running parallel to each other are provided as the transport device.

19. Device according to claim 10, **characterised in that** an angle or parallel gripper is provided as the ingredient gripper and/or skewer gripper (10).

20. Device according to claim 15, **characterised in that** the angle or parallel gripper (11) comprises two fingers (13) and on each finger a c law (14) for holding a piece of ingredient (4) and that each of the two fingers has a recess (21) on the side facing the other finger through which the skewer (17) can be conducted while the pieces of ingredient (4) are being pushed on.

21. Device according to one of claims 8 to 18, **characterised in that** suction grippers are provided as the ingredient grippers (11,12).

22. Device according to one of claims 8 to 18, **characterised in that** a needle gripper is provided as the ingredient gripper.

23. Device according to claim 22, **characterised in that** the needle gripper comprises at least two hollow cylinders in coaxial arrangement to each other, that one or more rotary drives are provided for rotating the hollow cylinders in opposite directions around the common axis, that a linear drive is provided for pushing the cylinders linearly in the direction of their common axis, that needles are provided arranged on the frontal sides of the hollow cylinders, the needles being inclined towards the frontal side, and that the torque of the one or more rotary drives of the hollow cylinders is controlled.

24. Device according to claim 23, **characterised in that** a robot is provided for the linear drive and one of the rotary drives.

25. Device according to claim 24, **characterised in that** an additional motor with torque control which is connected to the robot control is provided as the second rotary drive.

26. Device according to claim 22, **characterised in that**
a first and a second gripper block are provided,
guide elements which are rigidly connected to the first gripper block and movably guided in the second gripper block are provided,
one or more springs which are installed between the two gripper blocks are provided,
needles which are attached with one end in the second gripper block and are movably guided in needle guide channels of the first gripper block are provided,
a drive rigidly connected to the second gripper block is provided for moving the device into the proximity of a piece of foodstuff to be picked up, and
a sensor arranged on the second gripper block or on one of the guide elements is provided for measuring the distance by which the two blocks must be moved towards each other.

27. Device according to claim 26, **characterised in that** a control unit of the drive is provided to receive the distance measured by the sensor as input data.

28. Device according to one of claims 8 to 27, **characterised in that** a camera is provided as an optical sensor.

## Revendications

1. Procédé pour la fabrication de brochettes de produits alimentaires, **caractérisé par** les étapes de procédé suivantes :
fixation de la pique à brochette (17),
alimentation en morceaux d'aliments (4) sur un dispositif de transport,
détermination de la position des morceaux d'aliments sur le dispositif de transport à l'aide d'un capteur optique (3) et d'une unité de traitement d'image,
commande d'une ou de plusieurs pinces à ingrédients (5) en tenant compte de la position des morceaux d'aliments sur le dispositif de transport,
préhension des morceaux d'aliments avec la ou les pinces à ingrédients,
enfilage des morceaux d'aliments sur la pique à brochette à l'aide de la pince à ingrédients.

2. Procédé selon la revendication 1, **caractérisé en ce que** les morceaux d'aliments sont déposés à l'aide de la pince à ingrédients (5) dans un moule avant l'enfilage des morceaux d'aliments sur la pique à brochette, et qu'une pique à brochette est ensuite introduite dans le moule.

3. Procédé selon la revendication 1, **caractérisé par le fait que** les piques à brochette sont déplacées et maintenues en place à l'aide d'une pince à piques.

4. Procédé selon la revendication 1 ou 2, **caractérisé par le fait que** les pinces à ingrédients (5) et/ou la pince à piques (10) sont actionnées par une commande, l'unité de traitement d'image étant reliée à la commande ou faisant partie intégrante de la commande.

5. Procédé selon les revendications 1, 3 ou 4, **caractérisé par le fait**
**que** l'extrémité tronquée de la pique à brochette (17) repose sur un palier,
**que** la pique à brochette est maintenue en place, à proximité de l'extrémité pointue, à l'aide d'une pince à piques (10),
**qu'**un ou plusieurs morceaux d'ingrédients (4) sont pris à l'aide de pinces à ingrédients (5),
**qu'**un premier morceau d'ingrédient (4) est enfilé sur la pointe de la pique à brochette à l'aide d'une première pince à ingrédient (5),
**que** la pince à piques (10) s'ouvre,
**que** le morceau d'ingrédient (4) est poussé jusqu'à la position prévue sur la pique à brochette (17) à l'aide de la première pince à ingrédients (5),
**que** la pince à piques (10) se ferme,
**que** la première pince à ingrédients (5) s'ouvre,
**qu'**un deuxième morceau d'ingrédient (4) est enfilé sur la pointe de la pique à brochette (17) à l'aide de la première ou d'une deuxième pince à ingrédients (5), que les étapes suivantes : ouverture de la pince à piques, poussée du morceau d'ingrédient jusqu'à la position prescrite sur la pique à brochette, fermeture de la pince à piques, ouverture de la pince à ingrédients, enfilage d'un nouveau morceau d'ingrédient sur la pointe de la pique à brochette sont répétées jusqu'à ce que la pique à brochette comporte un nombre prescrit de morceaux d'ingrédients,
enlèvement de la pique à brochette garnie.

6. Procédé selon la revendication 5, **caractérisé par le fait qu'**un morceau d'ingrédient (4) sur deux n'est que piqué sur la pointe de la pique à brochette par la pince à ingrédients (5) et que la pince à ingrédients (5) s'ouvre ensuite, et que ce morceau d'ingrédient est poussé par le morceau d'ingrédient suivant jusqu'à la position prescrite sur la pique à brochette (17).

7. Procédé selon l'une des revendications 1, 3 et 6 précitées, **caractérisé par le fait que** les morceaux d'ingrédients sont enfilés avec un certain écart par rapport au morceau d'ingrédient voisin sur la pique à brochette.

8. Dispositif pour la fabrication de brochettes de produits alimentaires, en particulier pour l'exécution du procédé selon l'une des revendications 1 à 7,
**caractérisé par le fait**
**qu'**un support à piques est prévu pour une pique à brochette,
**qu'**un dispositif de transport est prévu pour l'alimentation en morceaux d'aliments (4),
**qu'**un capteur optique et une unité de traitement d'image sont prévus,
**qu'**une ou plusieurs pinces à ingrédients sont prévues pour la préhension des morceaux d'aliments depuis le dispositif de transport,
**qu'**une commande raccordée à l'unité de traitement d'image est prévue pour actionner les pinces à ingrédients.

9. Dispositif selon la revendication 8, **caractérisé par le fait qu'**un logement pour l'extrémité tronquée de la pique à brochette (17) est prévu comme support à piques.

10. Dispositif selon la revendication 8, **caractérisé par le fait qu'**une pince à piques est prévue comme support à piques ou en plus du support à piques pour maintenir en place et/ou déplacer la pique à brochette.

11. Dispositif selon la revendication 10, **caractérisé par le fait qu'**une commande est prévue pour actionner la pince à piques.

12. Dispositif selon l'une des revendications 8 à 11, **caractérisé par le fait qu'**un ou plusieurs moules sont prévus pour la réception et l'agencement des morceaux d'aliments.

13. Dispositif selon la revendication 12, **caractérisé par le fait que** les moules présentent des guidages pour la pique à brochette.

14. Dispositif selon la revendication 8, **caractérisé par le fait que** des gabarits sont prévus comme guidage pour la pique à brochette.

15. Dispositif selon l'une des revendications 8 à 14, **caractérisé par le fait que** plusieurs pinces à ingrédients (5, 11, 12) sont fixées sur une unité rotative (6) d'un bras mobile (7) d'un robot industriel (1).

16. Dispositif selon l'une des revendications 8 à 14, **caractérisé par le fait que** la ou les pinces à ingrédients sont agencées sur un dispositif de manipulation pouvant se déplacer et/ou être décalé linéairement dans deux dimensions.

17. Dispositif selon la revendication 16, **caractérisé par le fait que** le dispositif de manipulation est monté au-dessus du dispositif de transport.

18. Dispositif selon l'une des revendications 8 à 17, **caractérisé par le fait que** plusieurs courroies transporteuses circulant en parallèle sont prévues comme dispositif de transport.

19. Procédé selon la revendication 10, **caractérisé par le fait qu'**une pince angulaire ou parallèle est prévue comme pince à ingrédients et/ou comme pince à piques (10).

20. Dispositif selon la revendication 15, **caractérisé par le fait que** la pince angulaire ou parallèle (11) présente deux doigts (13) et respectivement une joue (14) fixée à chacun des doigts pour maintenir en place un morceau d'ingrédient (4), et que ces deux doigts présentent un évidement (21) sur les côtés se faisant face, évidement à travers lequel il est possible d'insérer la pique à brochette (17) pour enfiler les morceaux d'ingrédients (4).

21. Dispositif selon l'une des revendications 8 à 18, **caractérisé par le fait que** des pinces aspirantes sont prévues comme pinces à ingrédients (11, 12).

22. Dispositif selon l'une des revendications 8 à 18, **caractérisé par le fait qu'**une pince à aiguilles est prévue comme pince à ingrédients.

23. Dispositif selon la revendication 22, **caractérisé par le fait que** la pince à aiguilles présente au minimum deux cylindres creux agencés co-axialement l'un par rapport à l'autre, qu'un ou plusieurs entraînements de rotation sont prévus pour la rotation des cylindres en sens inverses autour de l'axe commun, qu'un entraînement linéaire est prévu pour le déplacement linéaire des cylindres dans le sens de leur axe commun, que sont prévues, sur la face avant des cylindres creux, des aiguilles inclinées en direction de la face avant, et que le ou les entraînements de rotation des cylindres creux sont commandés par couple.

24. Dispositif selon la revendication 23, **caractérisé par le fait qu'**un robot est prévu pour l'entraînement linéaire et l'un des entraînements de rotation.

25. Dispositif selon la revendication 24, **caractérisé par le fait que**, comme deuxième entraînement de rotation, est prévu un moteur supplémentaire avec commande par couple raccordée à la commande du robot.

26. Dispositif selon la revendication 22, **caractérisé par le fait qu'**un premier et un deuxième bloc de pinces sont prévus,
que sont prévus des éléments de guidage reliés à demeure au premier bloc de pinces et mobiles dans le deuxième bloc de pinces,
que sont prévus un ou plusieurs ressorts montés entre les deux blocs de pinces,
que sont prévues des aiguilles fixées à l'une de leurs extrémités dans le deuxième bloc de pinces et mobiles dans les canaux de guidage des aiguilles du premier bloc de pinces,
qu'est prévu un entraînement relié à demeure au deuxième bloc de pinces pour le rapprochement du dispositif vers un morceau d'aliments à saisir et
qu'est prévu un capteur monté sur le deuxième bloc de pinces ou sur l'un des éléments de guidage pour mesurer le trajet que doivent couvrir les deux blocs pour se rapprocher l'un de l'autre.

27. Dispositif selon la revendication 26, **caractérisé par le fait qu'**une commande de l'entraînement est prévue, commande qui reçoit comme données d'entrée le trajet mesuré par le capteur.

28. Dispositif selon l'une des revendications 8 à 27, **caractérisé par le fait qu'**une caméra est prévue comme capteur optique.
